# EUROPÄISCHE PATENTSCHRIFT

(11) **EP 3 456 463 B1**
(45) Veröffentlichungstag und Bekanntmachung des Hinweises auf die Patenterteilung: **02.08.2023**
(21) Anmeldenummer: 17191215.7
(22) Anmeldetag: 14.09.2017
(51) Int. Cl.: B23Q 1/48, B23B 29/034, B23Q 3/12, B23Q 3/155

(54) **BEARBEITUNGSKOPF ZUR AUSKAMMERUNG EINES WERKSTÜCKS**
MACHINING HEAD FOR BOTTLE BORING A WORKPIECE
TÊTE D'USINAGE POUR LE CHAMBRAGE D'UNE PIÈCE

(43) Veröffentlichungstag der Anmeldung: 20.03.2019
(73) Patentinhaber: AFW Holding GmbH, 4656 Kirchham (AT)
(72) Erfinder: WEINGÄRTNER, Dominik, 4643 Pettenbach (AT)
(74) Vertreter: Hafner & Kohl PartmbB

(56) Entgegenhaltungen:
- EP-A1- 2 756 918
- EP-A2- 1 291 130
- CH-A5- 679 289
- JP-U- S62 181 303
- US-A- 4 569 115
- US-A- 5 823 722
- US-A1- 2005 188 798
- US-A1- 2015 266 148

## Beschreibung

Die Erfindung betrifft einen Bearbeitungskopf zur spanenden Auskammerung eines Werkstücks. Entsprechende Bearbeitungsköpfe sind aus dem Bereich der mechanischen, d. h. insbesondere spanenden, Bearbeitung, d. h. z. B. des Fräsens, von Werkstücken an und für sich bekannt. US 4 569 115 A offenbart einen Bearbeitungskopf nach dem Oberbegriff des Anspruchs 1.

Entsprechende Bearbeitungsköpfe können z. B. zur Auskammerung bzw. Aussteuerung ("bottle boring", "seat boring") eines, typischerweise länglichen, Werkstücks dienen. Ein konkretes Anwendungs- bzw. Einsatzbeispiel eines entsprechenden Bearbeitungskopfs ist sonach die Auskammerung bzw. Aussteuerung eines Werkstücks, bei welcher ein typischerweise vollzylindrisches Werkstück ausgekammert bzw. ausgesteuert werden soll, um eine gewünschte Innenkontur, d. h. insbesondere eine bohrungsartige bzw. -förmige Ausnehmung, innerhalb des Werkstücks zu erzeugen.

Entsprechende Bearbeitungsköpfe werden typischerweise mit einem im Hinblick auf den jeweils durchzuführenden mechanischen Bearbeitungsvorgang gewählten Bearbeitungswerkzeug gekoppelt. Dabei ist es bisher üblich, dass die Ankopplung eines jeweiligen Bearbeitungswerkzeugs an einen Bearbeitungskopf über eine gesonderte zwischen diese geschaltet angeordnete Adaptereinrichtung erfolgt. Zur Ankopplung eines Bearbeitungswerkzeugs an einen Bearbeitungskopf ist sonach eine gesonderte Adaptereinrichtung erforderlich, um die Ankopplung des jeweiligen Bearbeitungswerkzeugs an den Bearbeitungskopf zu ermöglichen.

Die Ankopplung eines Bearbeitungswerkzeugs an einen Bearbeitungskopf ist demnach aufwändig, als hierfür eine gesonderte Adaptereinrichtung vorzusehen ist.

Der Erfindung liegt die Aufgabe zugrunde, eine demgegenüber, insbesondere im Hinblick auf eine vereinfachte Ankopplung eines Bearbeitungswerkzeugs an einen Bearbeitungskopf, verbesserten Bearbeitungskopf zur Auskammerung eines Werkstücks anzugeben.

Die Aufgabe wird durch einen Bearbeitungskopf gemäß Anspruch 1 gelöst. Die hierzu abhängigen Ansprüche betreffen mögliche Ausführungsformen des Bearbeitungskopfs. Der hierin beschriebene Bearbeitungskopf dient im Allgemeinen zur mechanischen, d. h. insbesondere spanenden, Bearbeitung eines Werkstücks. Der Bearbeitungskopf dient zur Auskammerung bzw. Aussteuerung ("bottle boring", "seat boring") eines Werkstücks.

Ein konkretes Anwendungs- bzw. Einsatzbeispiel des Bearbeitungskopfs ist sonach die Auskammerung bzw. Aussteuerung eines Werkstücks, bei welcher ein typischerweise vollzylindrisches Werkstück ausgekammert bzw. ausgesteuert werden soll, um eine gewünschte Innenkontur, d. h. insbesondere eine bohrungsartige bzw. -förmige Ausnehmung, innerhalb des Werkstücks zu erzeugen; mit anderen Worten soll ein typischerweise vollzylindrisches Werkstück mit einer bestimmten Innenkontur, d. h. typischerweise eine bohrungsartige bzw. -förmige Ausnehmung, versehen werden. Bei einem entsprechenden Werkstück kann es sich in allen Fällen um ein längliches Werkstück, d. h. z. B. um einen Zylinder, handeln.

Wie sich im Weiteren ergibt, wird der Bearbeitungskopf typischerweise in einem Bearbeitungszentrum zur mechanischen, d. h. insbesondere spanenden, Bearbeitung von Werkstücken eingesetzt.

Der Bearbeitungskopf umfasst eine kurz als Gehäuse bezeichnete, typischerweise zumindest abschnittsweise, insbesondere vollständig, geschlossene, Gehäusestruktur an oder in welcher bestimmte Funktionskomponenten des Bearbeitungskopfs bzw. einer durch Kopplung des Bearbeitungskopfs mit einem Bearbeitungswerkzeug gebildeten Bearbeitungseinrichtung angeordnet oder ausgebildet sind. Das Gehäuse umfasst typischerweise einen Gehäuseinnenraum, in welchem bestimmte Funktionskomponenten des Bearbeitungskopfs bzw. einer entsprechenden Bearbeitungseinrichtung angeordnet oder ausgebildet sind. Das Gehäuse kann zumindest abschnittsweise, gegebenenfalls vollständig, von wenigstens einem Blendenelement umgeben sein, welches die äußere Raumform des Gehäuses (mit)bestimmt.

Um ein Bearbeitungswerkzeug, bei welchem es sich insbesondere um ein Aussteuerwerkzeug handeln kann, an den Bearbeitungskopf zu koppeln, d. h. strukturell anzubinden, um einen mechanischen Bearbeitungsvorgang durchführen zu können, umfasst das Gehäuse einen Kopplungsbereich. Der Kopplungsbereich dient sonach zur Ankopplung eines an dem Bearbeitungskopf anzukoppelnden Bearbeitungswerkzeugs an den Bearbeitungskopf. Der Kopplungsbereich umfasst wenigstens eine Kopplungsschnittstelle zur direkten Ankopplung bzw. Kopplung eines an dem Bearbeitungskopf anzukoppelnden bzw. mit dem Bearbeitungskopf zu koppelnden Bearbeitungswerkzeugs. Die gehäuseseitige Kopplungsschnittstelle ermöglicht sonach eine direkte Kopplung eines Bearbeitungswerkzeugs mit dem Gehäuse ohne Zwischenschaltung eines weiteren Bauteils bzw. einer weiteren Bauteilgruppe, d. h. insbesondere ohne Zwischenschaltung einer Adaptereinrichtung, sodass ein mit dem Gehäuse gekoppeltes Bearbeitungswerkzeug direkt ohne Zwischenschaltung eines weiteren Bauteils bzw. einer weiteren Bauteilgruppe, d. h. insbesondere ohne Zwischenschaltung einer Adaptereinrichtung, an der gehäuseseitigen Kopplungsschnittstelle strukturell anbindbar bzw. angebunden ist.

Der gehäuseseitige Kopplungsbereich ist typischerweise zur (beschädigungs- bzw. zerstörungsfrei) lösbaren Ankopplung eines an dem Bearbeitungskopf anzukoppelnden Bearbeitungswerkzeugs eingerichtet; entsprechend ist die wenigstens eine Kopplungsschnittstelle typischerweise zur direkten lösbaren Ankopplung eines an dem Bearbeitungskopf anzukoppelnden Bearbeitungswerkzeugs eingerichtet, sodass jederzeit ein, z. B. im Fall des Einsatzes des Bearbeitungskopfs für unterschiedliche Bearbeitungsvorgänge, bedarfsweiser Austausch bzw. Wechsel von Bearbeitungswerkzeugen möglich ist.

Aus vorstehendem Absatz ergibt sich, dass die wenigstens eine Kopplungsschnittstelle zur direkten Ankopplung unterschiedlicher an dem Bearbeitungskopf anzukoppelnder Bearbeitungswerkzeuge eingerichtet sein kann. Der Bearbeitungskopf kann sonach mit unterschiedlichen Bearbeitungswerkzeugen koppelbar und sonach für unterschiedliche Bearbeitungsvorgänge einsetzbar sein. Unter unterschiedlichen Bearbeitungswerkzeugen sind sowohl Bearbeitungswerkzeuge gleicher als auch unterschiedlicher Bearbeitungsfunktion zu verstehen. Als Beispiel für unterschiedliche Bearbeitungswerkzeuge gleicher Bearbeitungsfunktion sind z. B. z. B. unterschiedlich dimensionierte Aussteuer- bzw. Auskammerwerkzeuge sowie Planbearbeitungswerkzeuge zu nennen.

Wesentlich an dem hierin beschriebenen Bearbeitungskopf ist die Möglichkeit der direkten Kopplung eines Bearbeitungswerkzeugs an das Gehäuse bzw. umgekehrt der direkten Kopplung des Gehäuses mit einem Bearbeitungswerkzeug, was in einem, insbesondere im Hinblick auf eine vereinfachte Ankopplung eines Bearbeitungswerkzeugs an einen Bearbeitungskopf, verbesserten Bearbeitungskopf zur Auskammerung eines Werkstücks resultiert.

Die direkte Kopplung zwischen einem Bearbeitungswerkzeug und der gehäuseseitigen Kopplungsschnittstelle erfolgt erfindungsgemäß durch mechanisches Zusammenwirken kopplungsschnittstellenseitiger Kopplungselemente und bearbeitungswerkzeugseitiger Kopplungselemente. Bei entsprechenden Kopplungselementen handelt es sich um Formschlusselemente, d. h. z. B. durch Vorsprünge gebildete Vorsprungelemente, oder durch Ausnehmungen, Aussparungen, etc., gebildete Aufnahmeelemente.

Durch das Zusammenwirken jeweiliger kopplungsschnittstellenseitiger und bearbeitungswerkzeugseitiger Kopplungselemente kann eine Schnellkopplung realisiert sein, sodass ein, z. B. vor einem Bearbeitungsvorgang oder im Fall eines Wechsels eines Bearbeitungswerkzeugs, an das Gehäuse anzukoppelndes Bearbeitungswerkzeug schnell und einfach, insbesondere automatisierbar bzw. automatisiert, an das Gehäuse ankoppelbar ist respektive ein, z. B. nach einem Bearbeitungsvorgang oder im Fall eines Wechsels eines Bearbeitungswerkzeugs, von dem Gehäuse abzukoppelndes Bearbeitungswerkzeug schnell und einfach, insbesondere automatisierbar bzw. automatisiert, von dem Gehäuse abkoppelbar ist.

Die gehäuseseitige Kopplungsschnittstelle kann als Kopplungsflansch ausgebildet sein und entsprechend als Kopplungsflansch bezeichnet bzw. erachtet werden.

Die gehäuseseitige Kopplungsschnittstelle kann wenigstens ein Kraftübertragungselement zur Übertragung einer seitens einer Antriebseinrichtung erzeugten Antriebskraft zum Antrieb eines direkt an dem Gehäuse angekoppelten Bearbeitungswerkzeugs umfassen. Die Kopplungsschnittstelle kann sonach nicht allein die direkte Kopplung eines Bearbeitungswerkzeugs mit dem Gehäuse, sondern zudem eine Übertragung einer seitens einer Antriebseinrichtung erzeugten Antriebskraft - hierunter ist auch ein Antriebs(kraft)moment zu verstehen - zum Antrieb eines direkt an dem Gehäuse angekoppelten Bearbeitungswerkzeugs ermöglichen. Gegebenenfalls kann ein entsprechendes Kraftübertragungselement durch ein entsprechendes kopplungsschnittstellenseitiges Kopplungselement gebildet sein oder umgekehrt. Die Möglichkeit, ein kopplungsschnittstellenseitiges Kopplungselement gleichermaßen als Kraftübertragungselement zu nutzen, stellt eine in funktioneller wie auch konstruktiver Hinsicht hochintegrierte und somit zweckmäßige Ausführung dar.

Eine entsprechende Antriebseinrichtung, welche z. B. als elektrischer und/oder hydraulischer Antrieb ausgebildet sein kann, kann (direkt) in oder an dem Gehäuse angeordnet oder ausgebildet sein. Der Bearbeitungskopf kann sonach eine (direkt) integrierte, d. h. in oder an dem Gehäuse angeordnete oder ausgebildete, Antriebseinrichtung umfassen, welche zur Erzeugung einer Antriebskraft zum Antrieb, insbesondere Drehantrieb, eines direkt an dem Gehäuse angekoppelten Bearbeitungswerkzeugs, insbesondere eines Aussteuerwerkzeugs, eingerichtet ist. Die Integration einer Antriebseinrichtung in den Bearbeitungskopf stellt eine in funktioneller wie auch konstruktiver Hinsicht hochintegrierte und somit zweckmäßige Ausführung des Bearbeitungskopfs dar. Sollte keine Antriebseinrichtung in das Gehäuse integriert sein, umfasst der Bearbeitungskopf typischerweise, insbesondere gehäuseseitig, Kraftübertragungselemente, d. h. z. B. Getriebeelemente, über welche sich eine seitens einer externen Antriebseinrichtung erzeugte Antriebskraft über den Bearbeitungskopf auf das Bearbeitungswerkzeug übertragen lässt. Entsprechende Kraftübertragungselemente können selbstverständlich auch bei einem Bearbeitungskopf mit integrierter Antriebseinrichtung vorhanden sein.

Neben einem Antrieb eines mit dem Bearbeitungskopf gekoppelten Bearbeitungswerkzeugs, wodurch dieses z. B. in eine Drehbewegung versetzt werden kann, kann für bestimmte Bearbeitungsvorgänge, d. h. z. B. für einen Aussteuervorgang, ein (axialer) Schub des Bearbeitungswerkzeugs erforderlich sein. Der Bearbeitungskopf kann entsprechend eine (direkt) integrierte, d. h. an oder in dem Gehäuse angeordnete oder ausgebildete, Vorschubeinrichtung, welche zur Erzeugung einer ein an das Gehäuse angekoppeltes Bearbeitungswerkzeug in eine Schubbewegung entlang einer Schubachse, d. h. z. B. der Maschinenachse (z-Achse) eines mit dem Bearbeitungskopf ausgestatteten Bearbeitungszentrums, versetzenden Schubkraft eingerichtet ist, umfassen. Eine entsprechende Vorschubeinrichtung kann eine Antriebseinrichtung, insbesondere eine, z. B. elektrisch und/oder hydraulisch ausgeführte, Linearantriebseinrichtung, umfassen, über welche die Schubkraft zur Versetzung des an das Gehäuse angekoppelten Bearbeitungswerkzeugs in eine Schubbewegung entlang der Schubachse erzeugbar bzw. erzeugt ist. Bei der Schubbewegung des Bearbeitungswerkzeugs kann es sich um eine Relativbewegung des Bearbeitungswerkzeugs relativ zu dem Gehäuse handeln. Das Bearbeitungswerkzeug kann sonach in Bezug auf das Bezugssystem Bearbeitungskopf bewegbar relativ zu dem Gehäuse an dem Gehäuse angekoppelt sein. In jedem Fall kann es sich bei einer Schubbewegung um eine Vorschubbewegung in Richtung des zu bearbeitenden Werkstücks oder eine entgegen gesetzte Rückschubbewegung handeln.

Der Bearbeitungskopf umfasst einen weiteren gehäuseseitigen Kopplungsbereich zur, insbesondere (beschädigungs- bzw. zerstörungsfrei) lösbaren, Ankopplung des Gehäuses an einer das Gehäuse lagernden Lagerungs- bzw. Trageinrichtung, wobei der weitere gehäuseseitige Kopplungsbereich wenigstens eine weitere Kopplungsschnittstelle zur Lagerung des Gehäuses an der Lagerungseinrichtung umfasst. Über den weiteren Kopplungsbereich bzw. die weitere Kopplungsschnittstelle ist eine strukturelle Anbindung des Gehäuses an einer das Gehäuse lagernden Lagerungseinrichtung möglich. Die Lagerungseinrichtung stellt typischerweise den Bestandteil des Bearbeitungskopfs dar, über welchen dieser an ein Bearbeitungszentrum angebunden bzw. angekoppelt werden kann.

Die Lagerungseinrichtung kann entsprechend wenigstens einen lagerungseinrichtungsseitigen Kopplungsbereich zur, insbesondere (beschädigungs- bzw. zerstörungsfrei) lösbaren, Ankopplung der Lagerungseinrichtung an, insbesondere an einem an einer bearbeitungszentrumseitigen Rahmenstruktur als Teil eines Maschinengestells bzw. -rahmens des Bearbeitungszentrums angeordneten oder ausgebildeten, Lagerabschnitt eines Bearbeitungszentrums umfassen.

Das Gehäuse ist in wenigstens einem Bewegungsfreiheitsgrad bewegbar an der Lagerungseinrichtung gelagert sein. Bei dem Bewegungsfreiheitsgrad handelt es sich um einen Dreh- bzw. Schwenkbewegungsfreiheitsgrad um eine Dreh- bzw. Schwenkachse. Bei der Dreh- bzw. Schwenkachse handelt es sich typischerweise um eine einer quer zu der bearbeitungszentrumseitigen Maschinenachse (z-Achse) ausgerichtete horizontale Achse (y-Achse).

Das Gehäuse kann demnach schwenkbar relativ zu einer als Referenzachse dienenden Raumachse, d. h. z. B. der bearbeitungszentrumseitigen Maschinenachse (z-Achse), gelagert sein, sodass sich durch entsprechende Schwenkbewegungen des Gehäuses unterschiedliche Bearbeitungsachsen bzw. -lagen realisieren lassen. Eine schwenkbare Lagerung kann ein Verschwenken des Gehäuses in und/oder gegen den Uhrzeigersinn um einen bestimmten Winkelbereich, z. B. von bis zu 360°, ermöglichen. Ein mit dem Gehäuse gekoppeltes Bearbeitungswerkzeug lässt sich sonach durch entsprechende Schwenkbewegungen des Gehäuses stufenlos oder in bestimmten Stufen in unterschiedlichen Raumachsen bzw. -richtungen ausrichten, was für bestimmte Bearbeitungsvorgänge, etwa zur Ausbildung schräg bezüglich einer horizontalen Achse verlaufender bohrungsartiger bzw. -förmiger Ausnehmungen in einem Werkstück, erforderlich bzw. zweckmäßig sein kann. Bewegungen, d. h. insbesondere entsprechende Schwenkbewegungen, des Gehäuses relativ zu der Lagerungseinrichtung können durch eine geeignete, z. B. motorische, Antriebseinrichtung, d. h. insbesondere eine Schwenkantriebseinrichtung, realisiert werden. Eine entsprechende Antriebseinrichtung kann lagerungseinrichtungsseitig oder gehäuseseitig angeordnet oder ausgebildet sein.

Für alle Ausführungsformen gilt, dass in oder an dem Bearbeitungskopf geeignete, z. B. leitungsartige, von einem Prozessfluid, d. h. z. B. einem Kühl- und/oder Spülfluid, oder Druckluft, etc. durchströmbare Versorgungselemente angeordnet oder ausgebildet sein können.

Die Erfindung betrifft neben dem Bearbeitungskopf auch eine Bearbeitungseinrichtung zur spanenden Auskammerung eines Werkstücks. Die Bearbeitungseinrichtung umfasst einen wie beschriebenen Bearbeitungskopf und ein direkt an dem Gehäuse des Bearbeitungskopfs angekoppeltes Aussteuerwerkzeug. Sämtliche Ausführungen im Zusammenhang mit dem Bearbeitungskopf gelten analog für die Bearbeitungseinrichtung.

Weiters betrifft die Erfindung ein Bearbeitungszentrum zur Auskammerung eines Werkstücks. Das z. B. als Fräszentrum ausgebildete Bearbeitungszentrum umfasst wenigstens einen wie beschriebenen Bearbeitungskopf oder wenigstens eine entsprechende Bearbeitungseinrichtung. Sämtliche Ausführungen im Zusammenhang mit dem Bearbeitungskopf gelten analog für das Bearbeitungszentrum.

Der wenigstens eine Bearbeitungskopf kann, wie weiter oben bereits erwähnt, an einem, insbesondere an einer bearbeitungszentrumseitigen Rahmenstruktur als Teil eines Maschinengestells bzw. -rahmens des Bearbeitungszentrums angeordneten oder ausgebildeten, Lagerabschnitt gelagert sein. Der bearbeitungszentrumseitige Lagerabschnitt wirkt typischerweise mit einer wie weiter oben im Zusammenhang mit dem Bearbeitungskopf beschriebenen bearbeitungskopfseitigen Lagerungseinrichtung zusammen. Wie erwähnt, stellt die bearbeitungskopfseitige Lagerungseinrichtung typischerweise den Bestandteil des Bearbeitungskopfs dar, über welchen dieser an ein Bearbeitungszentrum angebunden ist bzw. werden kann.

Das Bearbeitungszentrum kann grundsätzlich mit unterschiedlichen Bearbeitungsköpfen betrieben werden. Um eine integrierte Aufnahme- bzw. Lagermöglichkeit für nicht in Betrieb genommene Bearbeitungsköpfe zu schaffen, kann das Bearbeitungszentrum wenigstens einen lager- oder magazinartigen Aufnahmebereich bzw. -raum zur (zeitweisen) Aufnahme bzw. Lagerung wenigstens eines nicht in Betrieb genommenen Bearbeitungskopfs umfassen. In dem auch als Aufnahmestation für Bearbeitungsköpfe zu bezeichnenden bzw. zu erachtenden Aufnahmebereich können sonach nicht in Betrieb genommene Bearbeitungsköpfe aufgenommen bzw. gelagert werden. Der Aufnahmebereich kann in einen Teil des Maschinengestells bzw. -rahmens des Bearbeitungszentrums integriert, d. h. in oder an diesem angeordnet oder ausgebildet, sein.

Der Aufnahmebereich kann gesonderte Aufnahmeabteile zur jeweiligen Aufnahme wenigstens eines Bearbeitungskopfs umfassen. Jeweilige Aufnahmeabteile können regalartig z. B. in Reihen und/oder Spalten oder trommelartig angeordnet sein. Jeweilige Aufnahmeabteile können mit geeigneten Sensoreinrichtungen, d. h. z. B. Gewichtsensoren, optischen Sensoren, etc., versehen sein, um z. B. zu ermitteln, ob sich ein Bearbeitungskopf in einem Aufnahmeabteil befindet bzw. welcher Bearbeitungskopf sich in welchem Aufnahmeabteil befindet. Entsprechende Informationen sind datenmäßig in den seitens entsprechender Sensoreinrichtungen erzeugten Sensorinformationen enthalten. Einem Benutzer kann vermittels der seitens entsprechender Sensoreinrichtungen erzeugten Sensorinformationen sonach ein umfassendes Abbild über die aktuelle und gegebenenfalls auch künftige Belegung des Aufnahmebereichs mit Bearbeitungsköpfen gegeben werden. Selbstverständlich lassen sich entsprechende Sensorinformationen vermittels geeigneter Datenübertragungseinrichtungen bzw. -verbindungen grundsätzlich an beliebige Kommunikationspartner, d. h. z. B. eine Fertigungs- bzw. Steuerzentrale, übertragen.

Wie erwähnt, kann ein Bearbeitungskopf durch entsprechende An- und Abkopplung unterschiedlicher Bearbeitungswerkzeuge an das bzw. von dem Gehäuse mit unterschiedlichen Bearbeitungswerkzeugen betrieben werden. Um eine integrierte Aufnahme- bzw. Lagermöglichkeit für nicht in Betrieb genommene Bearbeitungswerkzeuge zu schaffen, kann das Bearbeitungszentrum wenigstens einen (gegebenenfalls weiteren) lager- oder magazinartigen Aufnahmebereich bzw. -raum zur (zeitweisen) Aufnahme bzw. Lagerung wenigstens eines nicht in Betrieb genommenen Bearbeitungswerkzeugs umfassen. In dem auch als Aufnahmestation für Bearbeitungswerkzeuge zu bezeichnenden bzw. zu erachtenden Aufnahmebereich können sonach nicht in Betrieb genommene Bearbeitungswerkzeuge aufgenommen bzw. gelagert werden. Der Aufnahmebereich kann in einen Teil des Maschinengestells bzw. -rahmens des Bearbeitungszentrums integriert, d. h. in oder an diesem angeordnet oder ausgebildet, sein.

Der Aufnahmebereich kann ebenso gesonderte Aufnahmeabteile zur jeweiligen Aufnahme wenigstens eines Bearbeitungswerkzeugs umfassen. Jeweilige Aufnahmeabteile können ebenso regalartig z. B. in Reihen und/oder Spalten oder trommelartig angeordnet sein. Jeweilige Aufnahmeabteile können ebenso mit geeigneten Sensoreinrichtungen, d. h. z. B. Gewichtsensoren, optischen Sensoren, etc., versehen sein, um z. B. zu ermitteln, ob sich ein Bearbeitungswerkzeug in einem Aufnahmeabteil befindet bzw. welches Bearbeitungswerkzeug sich in welchem Aufnahmeabteil befindet. Entsprechende Informationen sind datenmäßig in den seitens entsprechender Sensoreinrichtungen erzeugten Sensorinformationen enthalten. Einem Benutzer kann vermittels der seitens entsprechender Sensoreinrichtungen erzeugten Sensorinformationen sonach ein umfassendes Abbild über die aktuelle und gegebenenfalls auch künftige Belegung des Aufnahmebereichs mit Bearbeitungswerkzeugen gegeben werden. Selbstverständlich lassen sich entsprechende Sensorinformationen vermittels geeigneter Datenübertragungseinrichtungen bzw. -verbindungen grundsätzlich an beliebige Kommunikationspartner, d. h. z. B. eine Fertigungs- bzw. Steuerzentrale, übertragen.

Sofern das Bearbeitungszentrum sowohl einen Aufnahmebereich für Bearbeitungsköpfe als auch einen Aufnahmebereich für Bearbeitungswerkzeuge umfasst, können diese einander gegenüber liegend angeordnet bzw. ausgebildet sein. Jeweilige Aufnahmebereiche für Bearbeitungsköpfe und Bearbeitungswerkzeuge können demnach, insbesondere im Bereich jeweiliger einander gegenüber liegend angeordneter (freier) Enden des typischerweise länglichen Bearbeitungszentrums, einander gegenüber liegend angeordnet bzw. ausgebildet sein. Selbstverständlich ist es auch ein Aufnahmebereich ("kombinierter Aufnahmebereich") zur Aufnahme sowohl von Bearbeitungsköpfen als auch von Bearbeitungswerkzeugen möglich.

Es wurde erwähnt, dass der wenigstens eine Bearbeitungskopf an einem, insbesondere an einer bearbeitungszentrumseitigen Rahmenstruktur als Teil eines Maschinengestells bzw. -rahmens des Bearbeitungszentrums angeordneten oder ausgebildeten, Lagerabschnitt gelagert sein kann. Der Lagerabschnitt, gegebenenfalls samt einem daran gelagerten Bearbeitungskopf (mit oder ohne mit diesem gekoppelten Bearbeitungswerkzeug),, kann in wenigstens einem eine Bewegungsbahn definierenden Bewegungsfreiheitsgrad bewegbar relativ zu der bearbeitungszentrumseitigen Rahmenstruktur gelagert sein. Die bewegbare Lagerung des Lagerabschnitts ist insbesondere im Hinblick auf die Durchführung unterschiedlicher Bearbeitungsvorgänge sowie, wie sich im Weiteren ergibt, den Austausch bzw. Wechsel von Bearbeitungsköpfen bzw. -werkzeugen zweckmäßig. Bei einem entsprechenden Bewegungsfreiheitsgrad kann es sich grundsätzlich um einen translatorischen und/oder rotatorischen Bewegungsfreiheitsgrad handeln; bei einer Bewegungsbahn kann es sich demnach um eine translatorische und/oder rotatorische Bewegungsbahn handeln. Selbstverständlich sind kombinierte Bewegungen in unterschiedlichen Bewegungsfreiheitsgraden bzw. -bahnen möglich.

Ein jeweiliger Aufnahmebereich kann durch einen in eine Schließposition bewegbaren Schließabschnitt geschlossen werden, was, insbesondere im Betrieb des Bearbeitungszentrums, eine unerwünschte Verschmutzung der jeweils aufgenommenen Bearbeitungsköpfe bzw. -werkzeuge verhindert.

Im Folgenden werden Beispiele für bestimmte Bewegungen des Lagerabschnitts, gegebenenfalls samt einem daran gelagerten Bearbeitungskopf (mit oder ohne mit diesem gekoppelten Bearbeitungswerkzeug), in bzw. zwischen bestimmte(n) Positionen genannt, welche insbesondere im Hinblick auf einen Austausch bzw. Wechsel von Bearbeitungsköpfen bzw. -werkzeugen zweckmäßig sind:
Der Lagerabschnitt, gegebenenfalls samt einem daran gelagerten Bearbeitungskopf (mit oder ohne mit diesem gekoppelten Bearbeitungswerkzeug), kann z. B. in wenigstens einem eine Bewegungsbahn definierenden Bewegungsfreiheitsgrad zwischen einer Betriebsposition und einer Übergabeposition bewegbar gelagert sein bzw. bewegt werden. In der Betriebsposition ist ein an dem Lagerabschnitt gelagerter Bearbeitungskopf zur mechanischen Bearbeitung eines vermittels des Bearbeitungszentrums mechanisch zu bearbeitenden Werkstücks in Betrieb nehmbar.

In einer (ersten) Übergabeposition kann ein Bearbeitungswerkzeug, welches an einem an dem Lagerabschnitt gelagerten Bearbeitungskopf angekoppelt ist, in einen bzw. den bearbeitungszentrumseitigen lager- oder magazinartigen Aufnahmebereich zur Aufnahme wenigstens eines nicht in Betrieb genommenen Bearbeitungswerkzeugs zur Abkopplung von dem Bearbeitungskopf übergebbar sein bzw. ein in einem entsprechenden Aufnahmebereich aufgenommenes Bearbeitungswerkzeug an einen Bearbeitungskopf zur Ankopplung an den Bearbeitungskopf übergebbar sein. In der ersten Übergabeposition ist der Lagerabschnitt sonach derart relativ zu einem Aufnahmebereich zur Aufnahme von Bearbeitungswerkzeugen bewegt bzw. positioniert, dass eine Übergabe von Bearbeitungswerkzeugen in den Aufnahmebereich bzw. aus dem Aufnahmebereich möglich ist.

In einer der ersten Übergabeposition z. B. gegenüber liegenden weiteren bzw. zweiten Übergabeposition kann ein an dem Lagerabschnitt gelagerter Bearbeitungskopf in einen bzw. den bearbeitungszentrumseitigen lager- oder magazinartigen Aufnahmebereich zur Aufnahme wenigstens eines nicht in Betrieb genommenen Bearbeitungskopfs zur Abkopplung von dem Lagerabschnitt übergebbar sein oder ein in einem entsprechenden Aufnahmebereich aufgenommener Bearbeitungskopf zur Ankopplung an den Lagerabschnitt übergebbar sein. In der zweiten Übergabeposition ist der Lagerabschnitt sonach derart relativ zu einem Aufnahmebereich zur Aufnahme von Bearbeitungsköpfen bewegt bzw. positioniert, dass eine Übergabe von Bearbeitungsköpfen in den Aufnahmebereich bzw. aus dem Aufnahmebereich möglich ist.

Jeweilige erste und zweite Übergabepositionen können sich, insbesondere in einer gemeinsamen Ebene, oberhalb der Bearbeitungs- bzw. Maschinenachse befinden.

Selbstverständlich können die erste und die zweite Übergabeposition zusammenfallen, sofern ein Aufnahmebereich zur Aufnahme sowohl von Bearbeitungswerkzeugen als auch von Bearbeitungsköpfen vorhanden ist.

Die Handhabung jeweiliger Bearbeitungsköpfe bzw. -werkzeuge bzw. kann durch wenigstens eine Handhabungseinrichtung erfolgen. Die Handhabungseinrichtung ist zweckmäßig zur Realisierung einer automatisierbaren bzw. automatisierten Handhabung jeweiliger Bearbeitungsköpfe bzw. -werkzeuge bzw., insbesondere im Zusammenhang mit der Übergabe von Bearbeitungsköpfen bzw. -werkzeugen in aus einem entsprechenden Aufnahmebereich, bzw. der Kopplung von Bearbeitungswerkzeugen mit Bearbeitungsköpfen, eingerichtet. Eine entsprechende Handhabungseinrichtung kann als eine wenigstens ein Greiferelement umfassende Greifereinrichtung ausgebildet sein oder wenigstens eine solche umfassen. Eine Greifereinrichtung kann z. B. als ein (mehrachsiger) Greifroboter ausgebildet sein.

Das Bearbeitungszentrum kann demnach wenigstens eine Handhabungseinrichtung, welche zur, insbesondere automatisierbaren bzw. automatisierten, Handhabung eines Bearbeitungswerkzeugs im Zusammenhang mit der Übergabe eines Bearbeitungswerkzeugs aus einem bzw. in einen entsprechenden bearbeitungszentrumseitigen lager- oder magazinartigen Aufnahmebereich an einen Bearbeitungskopf zur An- oder Abkopplung des Bearbeitungswerkzeugs an das oder von dem Bearbeitungskopf eingerichtet ist, umfassen. Alternativ oder ergänzend kann das Bearbeitungszentrum eine Handhabungseinrichtung, welche zur, insbesondere automatisierbaren bzw. automatisierten, Handhabung eines Bearbeitungskopfs im Zusammenhang mit der Übergabe eines Bearbeitungskopfs aus einem bzw. in einen entsprechenden bearbeitungszentrumseitigen lager- oder magazinartigen Aufnahmebereich an einen Lagerabschnitt zur An- oder Abkopplung des Bearbeitungskopfs an den oder von dem Lagerabschnitt eingerichtet ist, umfassen.

Bewegungen des Lagerabschnitts, insbesondere zwischen jeweiligen Betriebs- und Übergabepositionen, sowie des oder der Handhabungseinrichtung bzw. der der Handhabungseinrichtung zugehörigen Handhabungselemente erfolgen typischerweise durch eine hard- und/oder softwaremäßig implementierte bearbeitungszentrumseitige Steuereinrichtung. Die Steuereinrichtung ist sonach zur Erzeugung von Bewegungen des Lagerabschnitts, insbesondere zwischen jeweiligen Betriebs- und Übergabepositionen, sowie des oder der der Handhabungseinrichtung zugehörigen Handhabungselemente steuernden Steuerinformationen eingerichtet.

Die Erfindung ist anhand eines Ausführungsbeispiels in den Zeichnungen erläutert. Dabei zeigt:
- Fig. 1, 2: je eine Prinzipdarstellung eines Bearbeitungskopfs gemäß einem Ausführungsbeispiel;
- Fig. 3: eine Prinzipdarstellung einer Bearbeitungseinrichtung gemäß einem Ausführungsbeispiel; und
- Fig. 4, 5: je eine Prinzipdarstellung eines Bearbeitungszentrums gemäß einem Ausführungsbeispiel.

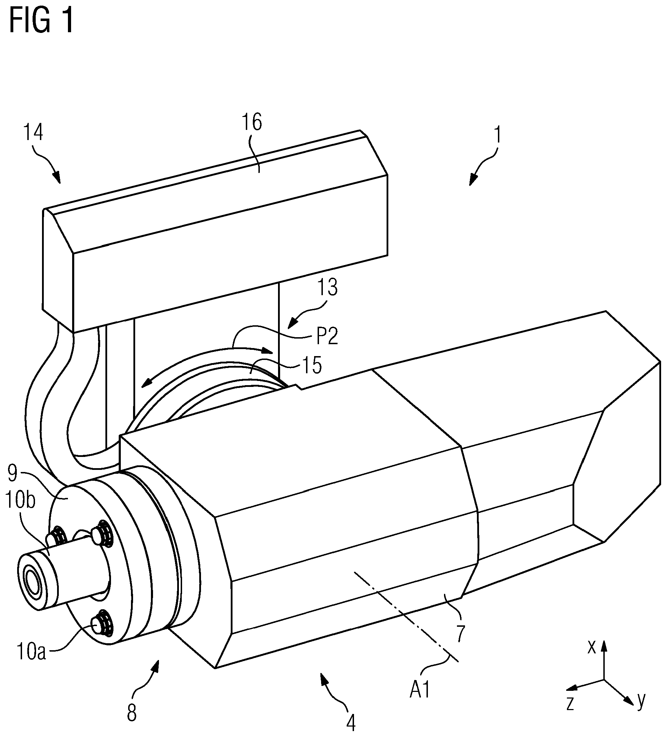

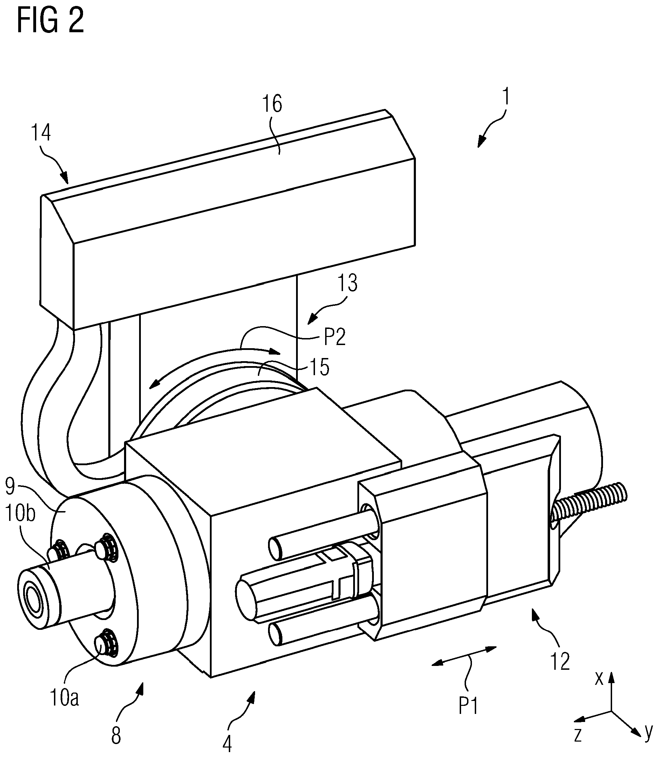

Die Fig. 1, 2 zeigen jeweils eine Prinzipdarstellung eines Bearbeitungskopfs 1 gemäß einem Ausführungsbeispiel. Der Bearbeitungskopf 1 ist in den Fig. 1, 2 jeweils in einer perspektivischen Ansicht dargestellt.

Der Bearbeitungskopf 1 dient im Allgemeinen zur Auskammerung bzw. Aussteuerung ("bottle boring", "seat boring") eines Werkstücks 2. Ein konkretes Anwendungs- bzw. Einsatzbeispiel des Bearbeitungskopfs 1 ist sonach die Auskammerung bzw. Aussteuerung eines Werkstücks 2. Bei dem Werkstück 2 kann es sich in um ein längliches Werkstück 2, d. h. z. B. um einen Zylinder, etc., handeln.

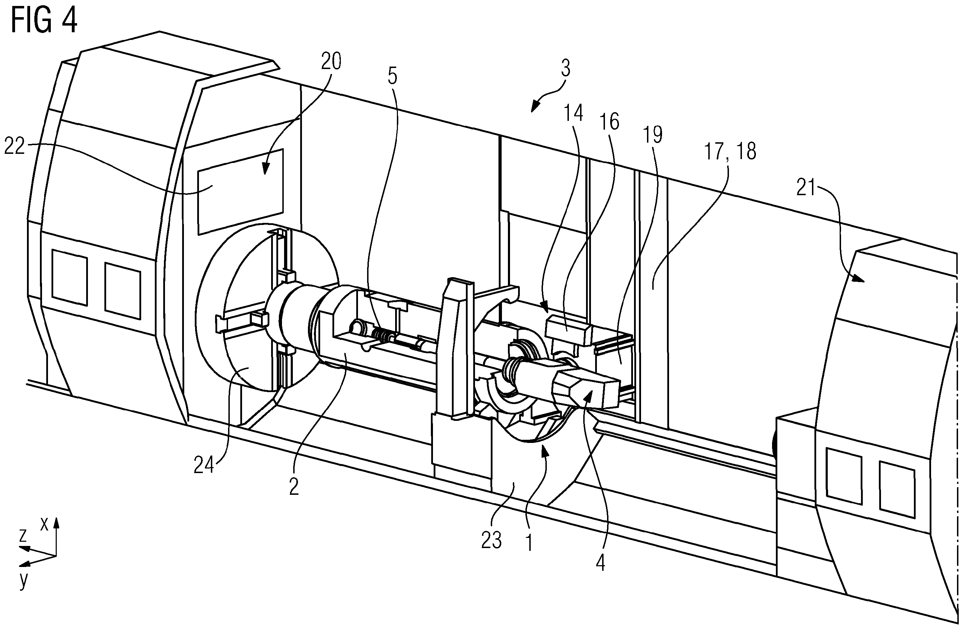

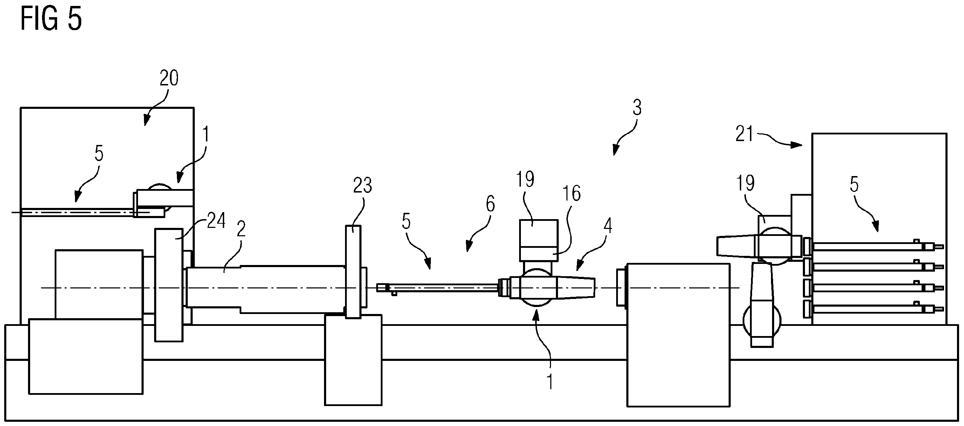

Wie weiter unten im Zusammenhang mit der Beschreibung der Fig. 4, 5 beschrieben ist, wird der Bearbeitungskopf 1 typischerweise in einem Bearbeitungszentrum 3 zur mechanischen, d. h. insbesondere spanenden, Bearbeitung von Werkstücken 2 eingesetzt.

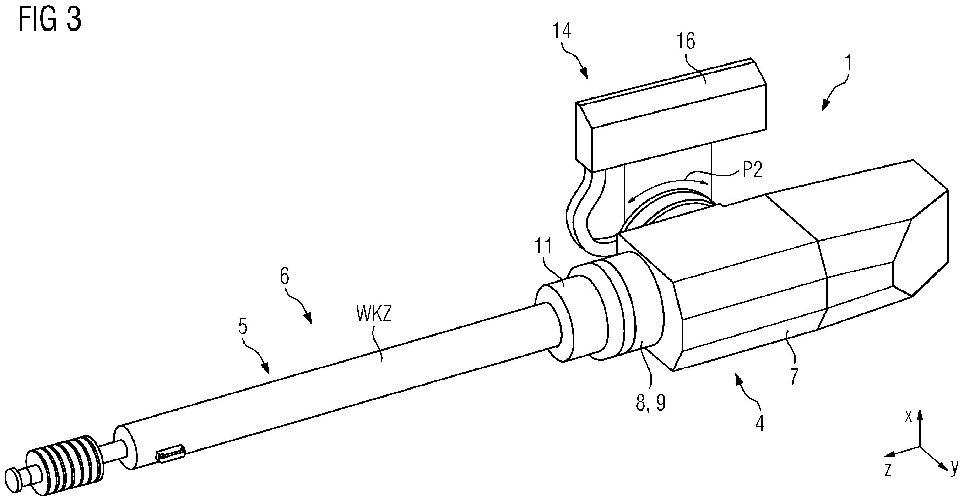

Der Bearbeitungskopf 1 umfasst eine kurz als Gehäuse 4 bezeichnete Gehäusestruktur an oder in welcher bestimmte Funktionskomponenten des Bearbeitungskopfs 1 bzw. einer durch Kopplung des Bearbeitungskopfs 1 mit einem Bearbeitungswerkzeug 5 gebildeten Bearbeitungseinrichtung 6 (vgl. Fig. 3) angeordnet oder ausgebildet sind. Das Gehäuse 4 umfasst typischerweise einen Gehäuseinnenraum (nicht gezeigt), in welchem bestimmte Funktionskomponenten des Bearbeitungskopfs 1 bzw. einer entsprechenden Bearbeitungseinrichtung 6 angeordnet oder ausgebildet sind. Das Gehäuse 4 kann - wie sich aus einem Vergleich der Fig. 1, 2 ergibt, wobei das Gehäuse 4 in Fig. 2 ohne Blendenelement 7 dargestellt ist - zumindest abschnittsweise von wenigstens einem Blendenelement 7 umgeben sein. Um ein Bearbeitungswerkzeug 5, bei welchem es sich in den in den Fig gezeigten Ausführungsbeispielen um ein Aussteuerwerkzeug handelt, an den Bearbeitungskopf 1 zu koppeln, d. h. strukturell anzubinden, um einen mechanischen Bearbeitungsvorgang durchführen zu können, umfasst das Gehäuse 4 einen Kopplungsbereich 8. Der Kopplungsbereich 8 dient sonach zur Ankopplung eines an dem Bearbeitungskopf 1 anzukoppelnden Bearbeitungswerkzeugs 5. Der Kopplungsbereich 8 umfasst wenigstens eine Kopplungsschnittstelle 9 zur direkten Ankopplung bzw. Kopplung eines an dem Bearbeitungskopf 1 anzukoppelnden bzw. mit dem Bearbeitungskopf 1 zu koppelnden Bearbeitungswerkzeugs 5. Die als Kopplungsflansch ausgebildete und entsprechend als Kopplungsflansch zu bezeichnende bzw. zu erachtende Kopplungsschnittstelle 9 ermöglicht eine direkte Kopplung eines Bearbeitungswerkzeugs 5 mit dem Gehäuse 4 ohne Zwischenschaltung eines weiteren Bauteils bzw. einer weiteren Bauteilgruppe, d. h. insbesondere ohne Zwischenschaltung einer Adaptereinrichtung.

Die Kopplungsschnittstelle 9 ist zur direkten lösbaren Ankopplung eines an dem Bearbeitungskopf 1 anzukoppelnden Bearbeitungswerkzeugs 5 eingerichtet, sodass jederzeit ein, z. B. im Fall des Einsatzes des Bearbeitungskopfs 1 für unterschiedliche Bearbeitungsvorgänge, bedarfsweiser Austausch bzw. Wechsel von Bearbeitungswerkzeugen 5 möglich ist.

Die Kopplungsschnittstelle 9 kann zur direkten Ankopplung unterschiedlicher an dem Bearbeitungskopf 1 anzukoppelnder Bearbeitungswerkzeuge 5 eingerichtet sein. Der Bearbeitungskopf 1 kann sonach mit unterschiedlichen Bearbeitungswerkzeugen 5 koppelbar und sonach für unterschiedliche Bearbeitungsvorgänge einsetzbar sein. Unter unterschiedlichen Bearbeitungswerkzeugen 5 sind sowohl Bearbeitungswerkzeuge 5 gleicher als auch unterschiedlicher Bearbeitungsfunktion zu verstehen.

Die direkte Kopplung zwischen einem Bearbeitungswerkzeug 5 und der Kopplungsschnittstelle 9 erfolgt durch, insbesondere mechanisches, Zusammenwirken kopplungsschnittstellenseitiger Kopplungselemente 10a, 10b und bearbeitungswerkzeugseitiger Kopplungselemente 11. Bei entsprechenden Kopplungselementen 10a, 10b, 11 kann es sich, wie anhand der Fig. 1, 2 ersichtlich, z. B. um Formschlusselemente, d. h. z. B. durch Vorsprünge gebildete Vorsprungelemente, oder durch Ausnehmungen, Aussparungen, etc., gebildete Aufnahmeelemente handeln. Durch das Zusammenwirken jeweiliger kopplungsschnittstellenseitiger und bearbeitungswerkzeugseitiger Kopplungselemente 10a, 10b, 11 kann eine kraftübertragende Schnellkopplung realisiert sein, sodass ein, z. B. vor einem Bearbeitungsvorgang oder im Fall eines Wechsels eines Bearbeitungswerkzeugs 5, an das Gehäuse 4 anzukoppelndes Bearbeitungswerkzeug 5 schnell und einfach, insbesondere automatisierbar bzw. automatisiert, an das Gehäuse 4 ankoppelbar ist respektive ein, z. B. nach einem Bearbeitungsvorgang oder im Fall eines Wechsels eines Bearbeitungswerkzeugs 5, von dem Gehäuse 4 abzukoppelndes Bearbeitungswerkzeug 5 schnell und einfach, insbesondere automatisierbar bzw. automatisiert, von dem Gehäuse 4 abkoppelbar ist.

Die gehäuseseitige Kopplungsschnittstelle 9 kann zudem wenigstens ein Kraftübertragungselement zur Übertragung einer seitens einer Antriebseinrichtung (nicht gezeigt) erzeugten Antriebskraft zum Antrieb eines direkt an dem Gehäuse 4 angekoppelten Bearbeitungswerkzeugs 5 umfassen. Die Kopplungsschnittstelle 9 kann sonach nicht allein die direkte Kopplung des Bearbeitungswerkzeugs mit dem Gehäuse 4, sondern zudem eine Übertragung einer seitens einer Antriebseinrichtung erzeugten Antriebskraft - hierunter ist auch ein Antriebs(kraft)moment zu verstehen - zum Antrieb eines direkt an dem Gehäuse 4 angekoppelten Bearbeitungswerkzeugs 5 ermöglichen. Ein entsprechendes Kraftübertragungselement ist in dem in den Fig. gezeigten Ausführungsbeispielen durch ein entsprechendes kopplungsschnittstellenseitiges Kopplungselement 10a, 10b gebildet.

Eine entsprechende Antriebseinrichtung, welche z. B. als elektrischer und/oder hydraulischer Antrieb ausgebildet sein kann, kann (direkt) in oder an dem Gehäuse 4 angeordnet oder ausgebildet sein. Der Bearbeitungskopf 1 kann sonach eine (direkt) integrierte, d. h. in oder an dem Gehäuse 4 angeordnete oder ausgebildete, Antriebseinrichtung umfassen, welche zur Erzeugung einer Antriebskraft zum Antrieb, insbesondere Drehantrieb, eines direkt an dem Gehäuse 4 angekoppelten Bearbeitungswerkzeugs 5 eingerichtet ist. Sollte keine Antriebseinrichtung in das Gehäuse 4 integriert sein, umfasst der Bearbeitungskopf 1 typischerweise, insbesondere gehäuseseitig, Kraftübertragungselemente, d. h. z. B. Getriebeelemente, über welche sich eine seitens einer externen Antriebseinrichtung erzeugte Antriebskraft über den Bearbeitungskopf 1 auf das Bearbeitungswerkzeug 5 übertragen lässt. Entsprechende Kraftübertragungselemente können selbstverständlich auch bei einem Bearbeitungskopf 1 mit integrierter Antriebseinrichtung vorhanden sein.

Neben einem Antrieb eines mit dem Bearbeitungskopf 1 gekoppelten Bearbeitungswerkzeugs 1, wodurch dieses z. B. in eine Drehbewegung versetzt werden kann, kann für bestimmte Bearbeitungsvorgänge, d. h. z. B. für einen Aussteuervorgang, ein (axialer) Schub des Bearbeitungswerkzeugs 5 erforderlich sein. Der Bearbeitungskopf 1 umfasst entsprechend eine (direkt) integrierte, d. h. an oder in dem Gehäuse 4 angeordnete oder ausgebildete, Vorschubeinrichtung 12, welche zur Erzeugung einer ein an das Gehäuse 4 angekoppeltes Bearbeitungswerkzeug 5 in eine Schubbewegung (Vor- oder Rückschubbewegung) entlang einer durch den Doppelpfeil P1 angedeuteten Schubachse, d. h. z. B. der Maschinenachse (z-Achse) eines mit dem Bearbeitungskopf 1 ausgestatteten Bearbeitungszentrums 3, versetzenden Schubkraft eingerichtet ist. Die Vorschubeinrichtung 12 kann eine Antriebseinrichtung (nicht näher bezeichnet), insbesondere eine, z. B. elektrisch und/oder hydraulisch ausgeführte, Linearantriebseinrichtung, umfassen, über welche die Schubkraft zur Versetzung des an das Gehäuse 4 angekoppelten Bearbeitungswerkzeugs 5 in eine Schubbewegung entlang der Schubachse erzeugbar bzw. erzeugt ist. Bei der Schubbewegung des Bearbeitungswerkzeugs 5 handelt es sich um eine Relativbewegung des Bearbeitungswerkzeugs 5 relativ zu dem Gehäuse 4.

Der Bearbeitungskopf 1 umfasst einen weiteren gehäuseseitigen Kopplungsbereich 13 zur lösbaren Ankopplung des Gehäuses 4 an einer das Gehäuse 4 lagernden Lagerungseinrichtung 14, wobei der weitere gehäuseseitige Kopplungsbereich 13 wenigstens eine weitere Kopplungsschnittstelle 15 zur Lagerung des Gehäuses 4 an der Lagerungseinrichtung 14 umfasst. Über den weiteren Kopplungsbereich 13 bzw. die weitere Kopplungsschnittstelle 15 ist eine strukturelle Anbindung des Gehäuses 4 an die das Gehäuse 4 lagernde Lagerungseinrichtung 14 möglich. Die Lagerungseinrichtung 14 stellt den Bestandteil des Bearbeitungskopfs 1 dar, über welchen dieser an ein Bearbeitungszentrum 3 angebunden bzw. angekoppelt werden kann.

Die Lagerungseinrichtung 14 kann entsprechend wenigstens einen lagerungseinrichtungsseitigen Kopplungsbereich 16 zur lösbaren Ankopplung der Lagerungseinrichtung 14 an einen, insbesondere an einem an einer bearbeitungszentrumseitigen Rahmenstruktur 17 als Teil eines Maschinengestells 18 bzw. -rahmens des Bearbeitungszentrums 3 angeordneten oder ausgebildeten, Lagerabschnitt 19 eines Bearbeitungszentrums 3 umfassen.

Das Gehäuse 4 kann in wenigstens einem Bewegungsfreiheitsgrad bewegbar an der Lagerungseinrichtung 14 gelagert sein. Bei dem Bewegungsfreiheitsgrad kann es sich um einen Dreh- bzw. Schwenkbewegungsfreiheitsgrad um eine Dreh- bzw. Schwenkachse A1 handeln. Fig. 1 zeigt, dass es sich bei der Dreh- bzw. Schwenkachse A1 um eine einer quer zu der bearbeitungszentrumseitigen Maschinenachse (z-Achse) ausgerichtete horizontale Achse (y-Achse) handelt.

Das Gehäuse 4 ist demnach schwenkbar relativ zu einer als Referenzachse dienenden Raumachse, d. h. z. B. der bearbeitungszentrumseitigen Maschinenachse (z-Achse), gelagert, sodass sich durch entsprechende Schwenkbewegungen des Gehäuses 4 unterschiedliche Bearbeitungsachsen bzw. -lagen realisieren lassen. Eine schwenkbare Lagerung kann, wie durch den Doppelpfeil P2 angedeutet, ein Verschwenken des Gehäuses 4 in und/oder gegen den Uhrzeigersinn um einen bestimmten Winkelbereich ermöglichen. Das mit dem Gehäuse 4 gekoppelte Bearbeitungswerkzeug 5 lässt sich sonach durch entsprechende Schwenkbewegungen des Gehäuses 4 stufenlos oder in bestimmten Stufen in unterschiedlichen Raumachsen bzw. -richtungen ausrichten, was für bestimmte Bearbeitungsvorgänge, etwa zur Ausbildung schräg bezüglich einer horizontalen Achse verlaufender bohrungsartiger bzw. -förmiger Ausnehmungen in einem Werkstück 2, erforderlich bzw. zweckmäßig sein kann. Schwenkbewegungen des Gehäuses 4 relativ zu der Lagerungseinrichtung 14 sind durch eine geeignete, z. B. motorische, Antriebseinrichtung (nicht gezeigt), d. h. insbesondere eine Schwenkantriebseinrichtung, realisiert. Die Antriebseinrichtung kann lagerungseinrichtungsseitig oder gehäuseseitig angeordnet oder ausgebildet sein.

Wenngleich in den Fig. nicht bezeichnet, können in oder an dem Bearbeitungskopf 1 geeignete, z. B. leitungsartige, von einem Prozessfluid, d. h. z. B. einem Kühl- und/oder Spülfluid, oder Druckluft durchströmbare Versorgungselemente angeordnet oder ausgebildet sein.

Die Fig. 4, 5 zeigen jeweils eine Prinzipdarstellung eines Bearbeitungszentrums 3 zur Aussteuerung, eines Werkstücks 2. Das Bearbeitungszentrum 3 ist in Fig. 4 in einer perspektivischen Ansicht und in Fig. 5 in einer Seitenansicht dargestellt. Das Bearbeitungszentrum 3 umfasst wenigstens einen Bearbeitungskopf 1 bzw. wenigstens eine Bearbeitungseinrichtung 6.

Ersichtlich ist der Bearbeitungskopf 1 dem an einer bearbeitungszentrumseitigen Rahmenstruktur 17 als Teil des Maschinengestells 18 des Bearbeitungszentrums 3 angeordneten bzw. ausgebildeten Lagerabschnitt 19 gelagert. Der bearbeitungszentrumseitige Lagerabschnitt 19 wirkt mit der bearbeitungskopfseitigen Lagerungseinrichtung 14 zusammen, welche, wie erwähnt, den Bestandteil des Bearbeitungskopfs 1 darstellt, über welchen dieser an ein Bearbeitungszentrum 3 angebunden ist bzw. werden kann.

Das Bearbeitungszentrum 3 kann grundsätzlich mit unterschiedlichen Bearbeitungsköpfen 1 betrieben werden. Um eine integrierte Aufnahme- bzw. Lagermöglichkeit für nicht in Betrieb genommene Bearbeitungsköpfe 1 zu schaffen, umfasst das Bearbeitungszentrum 3 einen lager- oder magazinartigen Aufnahmebereich bzw. -raum 20 zur (zeitweisen) Aufnahme bzw. Lagerung wenigstens eines nicht in Betrieb genommenen Bearbeitungskopfs 1. In dem auch als Aufnahmestation für Bearbeitungsköpfe 1 zu bezeichnenden bzw. zu erachtenden Aufnahmebereich 20 können sonach nicht in Betrieb genommene Bearbeitungsköpfe 1 aufgenommen bzw. gelagert werden. Der Aufnahmebereich 20 ist in einen Teil des Maschinengestells 18 des Bearbeitungszentrums 3 integriert, d. h. in oder an diesem angeordnet bzw. ausgebildet.

Der Aufnahmebereich 20 kann gesonderte Aufnahmeabteile (nicht gezeigt) zur jeweiligen Aufnahme wenigstens eines Bearbeitungskopfs 1 umfassen. Jeweilige Aufnahmeabteile können regalartig in Reihen und/oder Spalten oder trommelartig angeordnet und mit Sensoreinrichtungen (nicht gezeigt), d. h. z. B. Gewichtsensoren, optischen Sensoren, etc., versehen sein, um z. B. zu ermitteln, ob sich ein Bearbeitungskopf 1 in einem Aufnahmeabteil befindet bzw. welcher Bearbeitungskopf 1 sich in welchem Aufnahmeabteil befindet. Entsprechende Informationen sind datenmäßig in den seitens entsprechender Sensoreinrichtungen erzeugten Sensorinformationen enthalten. Einem Benutzer kann vermittels der seitens entsprechender Sensoreinrichtungen erzeugten Sensorinformationen sonach ein umfassendes Abbild über die aktuelle und gegebenenfalls auch künftige Belegung des Aufnahmebereichs 20 mit Bearbeitungsköpfen 1 gegeben werden. Entsprechende Sensorinformationen lassen sich vermittels geeigneter Datenübertragungseinrichtungen (nicht gezeigt) bzw. -verbindungen grundsätzlich an beliebige Kommunikationspartner, d. h. z. B. eine Fertigungs- bzw. Steuerzentrale, übertragen.

Wie erwähnt, kann ein Bearbeitungskopf 1 durch entsprechende An- und Abkopplung unterschiedlicher Bearbeitungswerkzeuge 5 an das bzw. von dem Gehäuse 4 mit unterschiedlichen Bearbeitungswerkzeugen 5 betrieben werden. Um eine integrierte Aufnahme- bzw. Lagermöglichkeit für nicht in Betrieb genommene Bearbeitungswerkzeuge 5 zu schaffen, umfasst das Bearbeitungszentrum 3 einen weiteren lager- oder magazinartigen Aufnahmebereich 21 bzw. -raum zur (zeitweisen) Aufnahme bzw. Lagerung wenigstens eines nicht in Betrieb genommenen Bearbeitungswerkzeugs 5. In dem auch als Aufnahmestation für Bearbeitungswerkzeuge 5 zu bezeichnenden bzw. zu erachtenden weiteren Aufnahmebereich 21 können sonach nicht in Betrieb genommene Bearbeitungswerkzeuge 5 aufgenommen bzw. gelagert werden. Auch der Aufnahmebereich 21 ist in einen Teil des Maschinengestells 18 des Bearbeitungszentrums 3 integriert, d. h. in oder an diesem angeordnet bzw. ausgebildet.

Der Aufnahmebereich 21 kann ebenso gesonderte Aufnahmeabteile (nicht gezeigt) zur jeweiligen Aufnahme wenigstens eines Bearbeitungswerkzeugs 5 umfassen. Jeweilige Aufnahmeabteile können ebenso regalartig in Reihen und/oder Spalten oder trommelartig angeordnet sein. Jeweilige Aufnahmeabteile können ebenso mit geeigneten Sensoreinrichtungen, d. h. z. B. Gewichtsensoren, optischen Sensoren, etc., versehen sein, um z. B. zu ermitteln, ob sich ein Bearbeitungswerkzeug 5 in einem Aufnahmeabteil befindet bzw. welches Bearbeitungswerkzeug 5 sich in welchem Aufnahmeabteil befindet. Entsprechende Informationen sind datenmäßig in den seitens entsprechender Sensoreinrichtungen erzeugten Sensorinformationen enthalten. Einem Benutzer kann vermittels der seitens entsprechender Sensoreinrichtungen erzeugten Sensorinformationen sonach ein umfassendes Abbild über die aktuelle und gegebenenfalls auch künftige Belegung des Aufnahmebereichs 21 mit Bearbeitungswerkzeugen 5 gegeben werden. Entsprechende Sensorinformationen lassen sich vermittels geeigneter Datenübertragungseinrichtungen bzw. -verbindungen grundsätzlich an beliebige Kommunikationspartner, d. h. z. B. eine Fertigungs- bzw. Steuerzentrale, übertragen.

In dem in den Fig. 4, 5 gezeigten Ausführungsbeispiel sind der Aufnahmebereich 20 für Bearbeitungsköpfe 1 und der Aufnahmebereich 21 für Bearbeitungswerkzeuge 5 im Bereich jeweiliger einander gegenüber liegend angeordneter (freier) Enden des Bearbeitungszentrums 3 beispielhaft einander gegenüber liegend angeordnet. Selbstverständlich ist grundsätzlich auch ein kombinierter Aufnahmebereich zur Aufnahme sowohl von Bearbeitungsköpfen 1 als auch von Bearbeitungswerkzeugen 5 möglich.

Ein jeweiliger Aufnahmebereich 20, 21 kann durch einen in eine Schließposition bewegbaren Schließabschnitt 22 (vgl. Fig. 4, links) geschlossen werden, was, insbesondere im Betrieb des Bearbeitungszentrums 3, eine unerwünschte Verschmutzung der jeweils aufgenommenen Bearbeitungsköpfe 1 bzw. -werkzeuge 5 verhindert.

Es wurde erwähnt, dass der Bearbeitungskopf 1 an dem an einer bearbeitungszentrumseitigen Rahmenstruktur 17 als Teil eines Maschinengestells 18 des Bearbeitungszentrums 3 angeordneten bzw. ausgebildeten Lagerabschnitt 19 gelagert ist. Der Lagerabschnitt 19, gegebenenfalls samt daran gelagerten Bearbeitungskopf 1 (mit oder ohne mit diesem gekoppelten Bearbeitungswerkzeug), kann in wenigstens einem eine Bewegungsbahn definierenden Bewegungsfreiheitsgrad bewegbar relativ zu der bearbeitungszentrumseitigen Rahmenstruktur 17 gelagert sein. Die bewegbare Lagerung des Lagerabschnitts 19 ist im Hinblick auf die Durchführung unterschiedlicher Bearbeitungsvorgänge sowie, wie sich im Weiteren ergibt, den Austausch bzw. Wechsel von Bearbeitungsköpfen 1 bzw. - werkzeugen 5 zweckmäßig.

Beispiele für Bewegungen des Lagerabschnitts 19, gegebenenfalls samt einem daran gelagerten Bearbeitungskopf 1 (mit oder ohne mit diesem gekoppelten Bearbeitungswerkzeug 5), in bzw. zwischen bestimmte(n) Positionen, welche insbesondere im Hinblick auf einen Austausch bzw. Wechsel von Bearbeitungsköpfen 1 bzw. -werkzeugen 5 zweckmäßig sind, sind im Folgenden beschrieben:

Der Lagerabschnitt 19, gegebenenfalls samt einem daran gelagerten Bearbeitungskopf 1 (mit oder ohne mit diesem gekoppelten Bearbeitungswerkzeug 5), kann z. B. in wenigstens einem eine Bewegungsbahn definierenden Bewegungsfreiheitsgrad zwischen einer in Fig. 4 bzw. in Fig. 5 (Mitte) gezeigten Betriebsposition und einer in Fig. 5 (rechts) gezeigten Übergabeposition bewegbar gelagert sein bzw. bewegt werden. In der Betriebsposition ist der an dem Lagerabschnitt 19 gelagerte Bearbeitungskopf 1 zur mechanischen Bearbeitung eines vermittels des Bearbeitungszentrums mechanisch zu bearbeitenden Werkstücks 2 in Betrieb nehmbar.

In einer ersten Übergabeposition, vgl. Fig. 5 rechts, kann ein Bearbeitungswerkzeug 5, welches an einem an dem Lagerabschnitt 19 gelagerten Bearbeitungskopf 1 angekoppelt ist, in den lager- oder magazinartigen Aufnahmebereich 21 zur Abkopplung von dem Bearbeitungskopf 1 übergebbar sein bzw. ein in dem Aufnahmebereich 21 aufgenommenes Bearbeitungswerkzeug 1 an einen Bearbeitungskopf 1 zur Ankopplung an den Bearbeitungskopf 1 übergebbar sein. In der ersten Übergabeposition ist der Lagerabschnitt 19 sonach derart relativ zu dem Aufnahmebereich 21 bewegt bzw. positioniert, dass eine Übergabe von Bearbeitungswerkzeugen in den Aufnahmebereich bzw. aus dem Aufnahmebereich möglich ist.

In einer der ersten Übergabeposition gegenüber liegenden weiteren bzw. zweiten Übergabeposition kann ein an dem Lagerabschnitt 19 gelagerter Bearbeitungskopf 1 in den lager- oder magazinartigen Aufnahmebereich 21 zur Aufnahme wenigstens eines nicht in Betrieb genommenen Bearbeitungskopfs 1 zur Abkopplung von dem Lagerabschnitt 19 übergebbar sein bzw. ein in dem Aufnahmebereich 21 aufgenommener Bearbeitungskopf 1 zur Ankopplung an den Lagerabschnitt 19 übergebbar sein. In der zweiten Übergabeposition ist der Lagerabschnitt 19 sonach derart relativ zu dem Aufnahmebereich 21 zur Aufnahme von Bearbeitungsköpfen 1 bewegt bzw. positioniert, dass eine Übergabe von Bearbeitungsköpfen 1 in den Aufnahmebereich 21 bzw. aus dem Aufnahmebereich 21 möglich ist.

In dem in den Fig. 4, 5 gezeigten Ausführungsbeispiel befinden sich jeweilige erste und zweite Übergabepositionen, insbesondere in einer gemeinsamen Ebene, oberhalb der Bearbeitungs- bzw. Maschinenachse.

Die Handhabung jeweiliger Bearbeitungsköpfe 1 bzw. -werkzeuge 5 kann durch eine Handhabungseinrichtung (nicht gezeigt) erfolgen. Die Handhabungseinrichtung ist zur Realisierung einer automatisierbaren bzw. automatisierten Handhabung jeweiliger Bearbeitungsköpfe 1 bzw. -werkzeuge 5 im Zusammenhang mit der Übergabe von Bearbeitungsköpfen 1 bzw. -werkzeugen 5 in aus einem entsprechenden Aufnahmebereich 20, 21, bzw. der Kopplung von Bearbeitungswerkzeugen 5 mit Bearbeitungsköpfen 1, eingerichtet. Die Handhabungseinrichtung kann als eine wenigstens ein Greiferelement umfassende Greifereinrichtung ausgebildet sein oder wenigstens eine solche umfassen. Eine Greifereinrichtung kann z. B. als ein (mehrachsiger) Greifroboter ausgebildet sein.

Bewegungen des Lagerabschnitts 19, insbesondere zwischen jeweiligen Betriebs- und Übergabepositionen, sowie des oder der Handhabungseinrichtung bzw. der der Handhabungseinrichtung zugehörigen Handhabungselemente erfolgen typischerweise durch eine hard- und/oder softwaremäßig implementierte bearbeitungszentrumseitige Steuereinrichtung (nicht gezeigt). Die Steuereinrichtung ist sonach zur Erzeugung von Bewegungen des Lagerabschnitts 19, insbesondere zwischen jeweiligen Betriebs- und Übergabepositionen, sowie des oder der der Handhabungseinrichtung zugehörigen Handhabungselemente steuernden Steuerinformationen eingerichtet.

Bewegungsbahnen des Lagerungsabschnitts 19 umfassen in allen Fällen typischerweise Bewegungskomponenten in z- und x-Richtung.

Schließlich ist im Zusammenhang mit den Fig. 4, 5 anzumerken, dass das zu bearbeitende Werkstück 2 über geeignete Stützeinrichtungen 23, 24 (Reitstock, Lünette) in einer Bearbeitungsposition abgestützt ist.

## Patentansprüche

1. Bearbeitungskopf (1) zur spanenden Auskammerung eines Werkstücks (2), umfassend:
ein Gehäuse (4),
einen gehäuseseitigen Kopplungsbereich (8) zur Ankopplung eines an dem Bearbeitungskopf (1) anzukoppelnden Bearbeitungswerkzeugs (5), wobei der gehäuseseitige Kopplungsbereich (8) wenigstens eine Kopplungsschnittstelle (9) zur direkten Ankopplung eines an dem Bearbeitungskopf (1) anzukoppelnden Bearbeitungswerkzeugs (5) umfasst,
wobei
die direkte Kopplung zwischen dem Bearbeitungswerkzeug (5) und der gehäuseseitigen Kopplungsschnittstelle (9) durch mechanisches Zusammenwirken kopplungsschnittstellenseitiger Kopplungselemente (10a, 10b) und bearbeitungswerkzeugseitiger Kopplungselemente (11) erfolgt, wobei es sich bei entsprechenden Kopplungselementen um Formschlusselemente, d. h. Vorsprungelemente oder Aufnahmeelemente, handelt, wodurch
eine Schnellkopplung realisiert ist, sodass ein an das Gehäuse (4) anzukoppelndes Bearbeitungswerkzeug automatisierbar bzw. automatisiert an das Gehäuse (4) ankoppelbar ist respektive ein von dem Gehäuse (4) abzukoppelndes Bearbeitungswerkzeug automatisierbar bzw. automatisiert von dem Gehäuse (4) abkoppelbar ist,
**dadurch gekennzeichnet, dass**
der Bearbeitungskopf (1) einen weiteren gehäuseseitigen Kopplungsbereich (13) zur Ankopplung des Gehäuses (4) an einer das Gehäuse (4) lagernden Lagerungseinrichtung (14) umfasst, wobei der weitere gehäuseseitige Kopplungsbereich (13) wenigstens eine weitere Kopplungsschnittstelle (15) zur Lagerung des Gehäuses (4) an der Lagerungseinrichtung (14) umfasst, wobei das Gehäuse (4) in einem Dreh- oder Schwenkbewegungsfreiheitsgrad bewegbar an der Lagerungseinrichtung (14) lagerbar bzw. gelagert ist.

2. Bearbeitungskopf nach Anspruch 1, **dadurch gekennzeichnet, dass** die Kopplungsschnittstelle (9) wenigstens ein Kraftübertragungselement zur Übertragung einer seitens einer Antriebseinrichtung erzeugten Antriebskraft zum Antrieb eines direkt an dem Gehäuse (4) angekoppelten Bearbeitungswerkzeugs (5) umfasst.

3. Bearbeitungskopf nach Anspruch 1 oder 2, **gekennzeichnet durch** eine in oder an dem Gehäuse (4) angeordnete oder ausgebildete, insbesondere motorische, Antriebseinrichtung, welche zur Erzeugung einer Antriebskraft zum Antrieb, insbesondere Drehantrieb, eines direkt an dem Gehäuse (4) angekoppelten Bearbeitungswerkzeugs (5) eingerichtet ist.

4. Bearbeitungskopf nach einem der vorhergehenden Ansprüche, **dadurch gekennzeichnet, dass** die wenigstens eine Kopplungsschnittstelle (9) zur direkten lösbaren Ankopplung eines an dem Bearbeitungskopf (1) anzukoppelnden Bearbeitungswerkzeugs (5) eingerichtet ist.

5. Bearbeitungskopf nach einem der vorhergehenden Ansprüche, **dadurch gekennzeichnet, dass** die wenigstens eine Kopplungsschnittstelle (9) zur direkten Ankopplung unterschiedlicher an dem Bearbeitungskopf (1) anzukoppelnder Bearbeitungswerkzeuge (5) eingerichtet ist.

6. Bearbeitungseinrichtung (6) zur spanenden Auskammerung eines Werkstücks (2), umfassend:
- einen Bearbeitungskopf (1) nach einem der vorhergehenden Ansprüche,
- ein direkt an dem Gehäuse (1) des Bearbeitungskopfs (1) angekoppeltes Bearbeitungswerkzeug (5), welches ein Auskammerwerkzeug ist,
- eine Lagerungseinrichtung (14), wobei der Bearbeitungskopf (1) den weiteren gehäuseseitigen Kopplungsbereich (13) zur Ankopplung des Gehäuses (4) an der das Gehäuse (4) lagernden Lagerungseinrichtung (14) umfasst, wobei der weitere gehäuseseitige Kopplungsbereich (13) wenigstens eine weitere Kopplungsschnittstelle (15) zur Lagerung des Gehäuses (4) an der Lagerungseinrichtung (14) umfasst, wobei das Gehäuse (4) in einem Dreh- oder Schwenkbewegungsfreiheitsgrad bewegbar an der Lagerungseinrichtung (14) gelagert ist.

7. Bearbeitungszentrum (3) zur spanenden Auskammerung eines Werkstücks (2), umfassend einen Bearbeitungskopf (1) nach einem der Ansprüche 1 bis 5 und/oder wenigstens eine Bearbeitungseinrichtung (6) nach Anspruch 6.

## Claims

1. Machining head (1) for bottle boring a workpiece (2) by chip removal, comprising:
a housing (4),
a housing-side coupling region (8) for coupling a machining tool (5) to be coupled to the machining head (1), wherein the housing-side coupling region (8) comprises at least one coupling interface (9) for directly coupling a machining tool (5) to be coupled to the machining head (1),
wherein the direct coupling between the machining tool (5) and the housing-side coupling interface (9) is effected by mechanical cooperation of coupling interface-side coupling elements (10a, 10b) and machining tool-side coupling elements (11), wherein corresponding coupling elements are form-fitting elements, i.e. protruding elements or receiving elements, whereby
rapid coupling is implemented, so that a machining tool to be coupled to the housing (4) can be coupled to the housing (4) in an automatable or automated manner, or a machining tool to be uncoupled from the housing (4) can be uncoupled from the housing (4) in an automatable or automated manner,
**characterised in that**
the machining head (1) comprises a further housing-side coupling region (13) for coupling the housing (4) to a support device (14) supporting the housing (4), wherein the further housing-side coupling region (13) comprises at least one further coupling interface (15) for supporting the housing (4) on the support device (14), wherein the housing (4) can be or is supported on the support device (14) so as to be movable with a rotational or pivotal degree of freedom of movement.

2. Machining head according to claim 1, **characterised in that** the coupling interface (9) comprises at least one force transmission element for transmitting a drive force generated on the side of a drive device for driving a machining tool (5) coupled directly to the housing (4).

3. Machining head according to claim 1 or 2, **characterised by** a, in particular a motorised, drive device, which is arranged or formed in or on the housing (4) and is configured to generate a drive force for driving, in particular for rotationally driving, a machining tool (5) directly coupled to the housing (4).

4. Machining head according to any one of the preceding claims, **characterised in that** the at least one coupling interface (9) is configured to directly and detachably couple a machining tool (5) to be coupled to the machining head (1).

5. Machining head according to any one of the preceding claims, **characterised in that** the at least one coupling interface (9) is configured to directly couple different machining tools (5) to be coupled to the machining head (1).

6. Machining device (6) for bottle boring a workpiece (2) by chip removal, comprising:
- a machining head (1) according to any one of the preceding claims,
- a machining tool (5) directly coupled to the housing (1) of the machining head (1), which is a bottle boring tool,
- a support device (14), wherein the machining head (1) comprises the further housing-side coupling region (13) for coupling the housing (4) to the support device (14) supporting the housing (4), wherein the other housing-side coupling region (13) comprises at least one further coupling interface (15) for supporting the housing (4) on the support device (14), wherein the housing (4) is supported on the support device (14) so as to be movable with a rotational or pivotal degree of freedom of movement.

7. Machining centre (3) for bottle boring a workpiece (2) by chip removal, comprising
a machining head (1) according to any one of claims 1 to 5 and/or at least one machining device (6) according to claim 6.

## Revendications

1. Tête d'usinage (1) destinée au chambrage par enlèvement de copeaux d'une pièce (2), comprenant :
un boîtier (4),
une zone de couplage côté boîtier (8) destinée à accoupler un outil d'usinage (5) à accoupler à la tête d'usinage (1), dans laquelle la zone de couplage côté boîtier (8) comprend au moins une interface de couplage (9) destinée à accoupler directement un outil d'usinage (5) à accoupler à la tête d'usinage (1),
dans laquelle le couplage direct entre l'outil d'usinage (5) et l'interface de couplage (9) côté boîtier est effectué par coopération mécanique d'éléments de couplage côté interface de couplage (10a, 10b) et d'éléments de couplage côté outil d'usinage (11), dans laquelle des éléments de couplage correspondants sont des éléments à complémentarité de forme, en d'autres termes des éléments de partie faisant saillie ou des éléments de réception ce qui permet
de réaliser un couplage rapide si bien qu'un outil d'usinage à accoupler au boîtier (4) peut être accouplé de manière automatisable ou de manière automatisée au boîtier (4) ou un outil d'usinage à désaccoupler du boîtier (4) peut être désaccouplé de manière automatisable ou de manière automatisée du boîtier (4),
**caractérisée en ce que**
la tête d'usinage (1) comprend une autre zone de couplage côté boîtier (13) destinée à accoupler le boîtier (4) à un dispositif de montage (14) supportant le boîtier (4), dans laquelle l'autre zone de couplage côté boîtier (13) comprend au moins une autre interface de couplage (15) destinée à monter le boîtier (4) sur le dispositif de montage (14), dans laquelle le boîtier (4) peut être monté ou est monté sur le dispositif de montage (14) de manière à pouvoir être déplacé selon un degré de liberté de mouvement par rotation ou par pivotement.

2. Tête d'usinage selon la revendication 1, **caractérisée en ce que** l'interface de couplage (9) comprend au moins un élément de transmission de force destiné à transmettre une force d'entraînement générée du côté d'un dispositif d'entraînement pour entraîner un outil d'usinage (5) accouplé directement au boîtier (4).

3. Tête d'usinage selon la revendication 1 ou 2, **caractérisée par** un dispositif d'entraînement, en particulier motorisé, disposé ou réalisé dans ou sur le boîtier (4), lequel est mis au point pour générer une force d'entraînement destinée à entraîner, en particulier à entraîner en rotation, un outil d'usinage (5) accouplé directement au boîtier (4).

4. Tête d'usinage selon l'une quelconque des revendications précédentes, **caractérisée en ce que** l'au moins une interface de couplage (9) est mise au point pour accoupler directement de manière amovible un outil d'usinage (5) à accoupler à la tête d'usinage (1).

5. Tête d'usinage selon l'une quelconque des revendications précédentes, **caractérisée en ce que** l'au moins une interface de couplage (9) est mise au point pour accoupler directement différents outils d'usinage (5) à accoupler à la tête d'usinage (1).

6. Dispositif d'usinage (6) destiné au chambrage par enlèvement de copeaux d'une pièce (2), comprenant :
- une tête d'usinage (1) selon l'une quelconque des revendications précédentes,
- un outil d'usinage (5) directement accouplé au boîtier (1) de la tête d'usinage (1), lequel est un outil de chambrage,
- un dispositif de montage (14), dans lequel la tête d'usinage (1) comprend l'autre zone de couplage côté boîtier (13) destinée à accoupler le boîtier (4) au dispositif de montage (14) supportant le boîtier (4), dans lequel l'autre zone de couplage côté boîtier (13) comprend au moins une autre interface de couplage (15) destinée à monter le boîtier (4) sur le dispositif de montage (14), dans lequel le boîtier (4) est monté sur le dispositif de montage (14) de manière à pouvoir être déplacé selon un degré de liberté de mouvement par rotation ou par pivotement.

7. Centre d'usinage (3) destiné au chambrage par enlèvement de copeaux d'une pièce (2), comprenant
une tête d'usinage (1) selon l'une quelconque des revendications 1 à 5 et/ou au moins un dispositif d'usinage (6) selon la revendication 6.
